(19) **Europäisches Patentamt**

**European Patent Office**

**Office européen des brevets**

(11) **EP 1 431 160 B1**

(12) **EUROPEAN PATENT SPECIFICATION**

(45) Date of publication and mention
of the grant of the patent:
**26.07.2006 Bulletin 2006/30**

(51) Int Cl.:
***B62D 5/04*** *(2006.01)*

(21) Application number: **02028566.4**

(22) Date of filing: **20.12.2002**

(54) **Control strategy for computer-controlled steering**

Regelungsstrategie für rechnergeregelte Lenkung

Strategie de commande pour direction cammandée par ordinateur

(84) Designated Contracting States:
**DE GB SE**

(43) Date of publication of application:
**23.06.2004 Bulletin 2004/26**

(73) Proprietor: **Ford Global Technologies, LLC.
Dearborn MI 48126 (US)**

(72) Inventors:
• **Ekmark, Jonas
424 70 Olofstorp (SE)**

• **Pohl, Jochen
412 55 Göteborg (SE)**

(74) Representative: **Egeröd, Lisbeth et al
Valea AB
Lindholmspiren 5
417 56 Gothenburg (SE)**

(56) References cited:
**WO-A-02/076806          DE-A- 19 536 989
US-B1- 6 250 419**

**Description**

Field of Invention

The present invention generally relates to a power assisted steering system arranged to supply a steering assist force to the steering system of an automobile or vehicle. In particularly the invention relates to a steering system, which allows a control of the steering characteristics experienced by the driver.

Background of the invention

Different steering equipments for assisting a driver to steer an automobile or a vehicle are well known in the art. Traditionally the driver controls the direction of the vehicle with the aid of a steering wheel mechanically connected to the road wheels through a steering assembly. However, to assist the driver it is common to use an auxiliary system to generate an additional force, which is applied to the steering assembly of the vehicle. The additional force reduces the effort required by the driver in changing the direction of the road wheels. Said additional force can be generated by different techniques, e.g. by a hydraulic drive or an electric motor.

Traditionally, various Hydraulic Power Assisted Steering (HPAS) systems have been used to add a certain amount of assist torque or assist force to the steering assembly of the vehicle. Such hydraulic systems are typically based on an assist characteristic, often called boost-curve. The shape of a boost-curve is generally determined by the design of the valve and the pump in the hydraulic system. It follows that the assist characteristic in a traditional HPAS-system is static, i.e. the relation between the steering effort required from the driver and the assist torque supplied by the HPAS-system is dependent on a predetermined and static boost-curve. The operation of a boost-curve based HPAS-system is generally such that a certain torque applied by the driver to the steering wheel results in a certain assist torque applied by the HPAS-system to the steering assembly of the vehicle, where the assist torque increases as the driver needs to apply more torque to the steering wheel and decreases as the driver needs to apply less torque to the steering wheel. The amount of torque, which the driver needs to apply to the steering wheel, is in turn dependent upon the specific driving scenario, e.g. dependent upon the vehicle speed, the vehicle turning angle etc.

The static or nearly static assist characteristic of an HPAS-system makes it difficult or impossible to find an appropriate balance between the transmission of road disturbances to the driver and the delivery of suitable steering feel to the driver.

If an HPAS-system uses high static assist torque, less steering effort is needed from the driver, which can be advantageous e.g. to reduce the steering effort needed for parking manoeuvres. A high assist torque will also reduce the transmission of road disturbances to the steering wheel when the vehicle moves, which is another advantage. However, while a high assist torque reduces the influence from road disturbances, a high assist torque will also make the vehicle sensitive for steering wheel inputs, especially at highway speed, which is a disadvantage since it reduces the steering feel.

If an HPAS-system uses a low static assist torque, more steering effort is needed from the driver. However, this stabilises vehicle response to manoeuvres at highway speed and consequently increases the steering feel, which is an advantage. On the other hand, low assist torque will also increase the transmission of road disturbances to the driver, which is an unwanted effect in the steering wheel and consequently a disadvantage.

HPAS-systems of the kind now discussed had its major breakthrough in the early sixties and the overall system configuration has remained the same. Minor modifications have been made in order to meet the demands of today's customers. Still, the main task of an HPAS-system is to reduce the steering effort required by the driver by adding a certain amount of assist force to the steering assembly of the vehicle. Such ordinary HPAS-systems use a low assist force (low amplification) to accomplish a suitable steering feel, which means that ordinary HPAS-systems is unable to adequately attenuate road disturbances. This is one important disadvantage with ordinary HPAS-systems.

However, in recent years the older HPAS-systems has been replaced by various new Electric Power Assisted Steering (EPAS) systems to be used in connection with vehicle steering.

The patent US 6,250,419 B1 (Chabaan) shows a steering system of an automobile, wherein a H-infinity controller is used to control an electric motor in an EPAS-system. The H-infinity controller makes a contribution to the control of the electric motor depending on estimated pinion torque, steering column angle, electric motor velocity, desired assist torque, estimated driver torque, and a measure of the steering wheel torque applied by the driver. The final control signal U, which is received by the electric motor, is then calculated by adding a contribution from a non-linear boost-curve to the result from the H-infinity controller. The boost-curve maps the amount of input command to the electric motor versus the estimated driver torque (i.e. an estimation of the torque actually applied by the driver), i.e. depending on the estimated driver torque the boost-curve points out an amount of input command to be supplied to the electric motor. The overall concept is in line with a traditional boost-curve strategy. Hence, Chabaan does not explicitly decouple the control of the steering wheel torque from attenuation of road disturbances, since the output from the boost-curve is influenced by road disturbances inherent in the estimated driver torque.

The patent US 6,219,604 B1 (Dilger) shows a steering system of an automobile, wherein a controller structure for an entire steering system is described. The controller structure uses a steer-by-wire concept, which means that there is no mechanical connection between the steering wheel and the steering gear assembly. If such a mechanical connection were present in the steering gear assembly it would be responsible for transmission of road disturbances to the driver. When this connection is substituted or simulated by e.g. electrical means, road disturbances can be eliminated.

To convey a steering feel to the driver Dilger provides a first electric motor that, controlled by an electronic steering device, imposes a controllable resistance torque to the steering wheel. The steering wheel resistance torque can be determined and processed e.g. by measuring the current applied to a second electric motor that imposes a steering torque to the steering gear assembly, or by directly measuring the torque that is imposed by said second electrical motor to the steering gear assembly. The steering wheel resistance torque may alternatively be calculated by creating a model, using various vehicle data (e.g. vehicle speed, friction between road surface and tires, steering wheel angle, etc). Dilger describes both variants in col. 6 at line 5 and forward.

If the resistance torque is determined by measuring the current applied to the second electric motor, which imposes a torque to the steering gear assembly, or if it is determined by directly measuring said torque, it is possible to filter and thereby reduce transfer of road surface irregularities, vibrations etc to the steering wheel, see e.g. col. 6 line 51-56. However, Dilger merely mentions the possibility of said filtering and does not reveal any further information regarding the operation and constitution of such a filter.

If the resistance torque is determined by creating a model, using various vehicle data, it might be possible to reduce transfer of road surface irregularities, vibrations etc to the steering wheel. Here again, Dilger merely mentions the possibility of said filtering and does not reveal any further information regarding the operation and constitution of such a model. Dilger also shows a reference generator that serves to provide a desired yaw component. However, this is e.g. different from supplying a desired steering wheel torque.

The patent application WO 01/47762 A1 shows a steering system of an automobile, wherein a scheme for stabilizing an electric power steering system under adverse road conditions is described. Adverse road conditions could e.g. occur when the road is wet or icy. The patent does not specifically address the question of generating a desired assist torque or a desired steering feel, see e.g. page 4, line 26-29.

The patent US 6,013,994 shows a steering system of an automobile, wherein a control strategy is implemented in the motor controller adapted to control the behaviour of the electric motor in an EPAS-system. This control strategy may be implemented in most motor controllers, e.g. in the motor controller mentioned in this patent application. However, in this connection it should be noted that the motor controller only constitutes a part of the invention according to this patent application.

To summarise, the prior art references cited above do not specifically address the problem of controlling the steering characteristics experienced by the driver and at the same time controlling the amount of road disturbances transmitted to the driver. Especially, the references do not address the problem of accomplishing a control of the steering characteristics independent from the control of said transmission of road disturbances. In particular they do not address said problems in connection with a vehicle steering assembly comprising a steering shaft arrangement, which mechanically connects the steering wheel to the road wheels.

DE19536989 (*Yamamoto*) relates to a vehicle steering control system wherein an actuating steering torque is composed of an assist steering torque which amplitude is based on manual steering torque and a steering reaction torque which acts against external disturbances, the steering reaction torque being determined to cancel the detected actual yaw rate, see e.g. col. 2, lines 13-68. The electric power steering control unit 26 carries out the control for the normal power assist for the steering force or the actuating torque for the steerable front wheels 9. This control unit 26 may be optionally capable of also determining the target actuating torque according to the lateral acceleration and the yaw rate, see e.g. col. 4, lines 31-36. This means that a target value for the normal component of assist torque is determined either from a measured value (torque sensor 16) or from a calculated value. No comparison is made between a measured and a calculated value. The active steering reaction computing unit 27 computes the target actuating torque according to the output signals from the various sensors 15 to 23, see col 4, lines 37-41. This means that a target value for the torque steer component of assist torque is determined The output current deterrnining unit 29 determines the target driving current signal, which is proportional or otherwise corresponds to the deviation of the actual steering torque obtained from the torque sensor 16 from the target steering torque value. The target driving current signal is however opposite in sign to the deviation, see e.g. col. 4, lines 41-48. This means that the output current is determined from the sum of the normal component of assist torque and the torque steer component of assist torque. The target drive current value thus obtained is supplied to the drive circuit 25. This drive circuit 25 controls the electric motor 10, for instance by PWM control, and an actually detected current value obtained from a current detection sensor is fed back to the input signal to the drive circuit 25 or the target drive current value, see e.g. col. 4, lines 49-55. This means that the drive current for the assist motor may be controlled by a feed back loop.

Summary of the invention

The present invention relates to a power assisted steering system constituted so as to impose a steering assist force or torque to the steering assembly of an automobile or vehicle. In particularly the invention relates to a system for controlling the steering characteristics experienced by the driver and the amount of road disturbances transmitted to the driver, wherein said steering characteristics is determined and controlled independently from the control of said transmission of road disturbances. Therefore, a two degree-of-freedom steering system is disclosed by the invention.

The steering system according to the invention includes a control system comprising a generator for calculating a desired steering wheel torque that should be felt by the driver of the vehicle. The control system further includes a first controller and possibly a second controller, where the first controller controls a motor controller, possibly in cooperation with said second controller. In turn the motor controller controls a motor that imposes a steering assist force or torque to the steering assembly of the vehicle.

The generator in the control system calculates a desired steering wheel resist torque that should be felt by the driver of the vehicle, dependent upon the current driving scenario. The current driving scenario can be determined by observing, measuring, calculating etc such vehicle statuses as e.g. yaw rate, vehicle lateral acceleration, steering wheel angle, steering wheel angular speed and vehicle speed etc, but also by observing, measuring, calculating etc various driver signals such as signals from the throttle pedal or the break pedal etc. It should be noted that said calculated desired steering wheel resist torque is independent from any measure of various torque forces imposed on the steering assembly. Any such measure may contain road disturbances, which should not be transmitted to the driver.

The first controller in the control system is generally based on an inverse model of the steering system dynamic. The design of a suitable first controller falls into the area of traditional control engineering and various designs are well known to a person skilled in the art. According to the invention, the first controller calculates an assist torque to be imposed by the motor to the steering gear assembly, so that steering wheel resist torque actually felt by the driver corresponds to or equals the desired steering wheel resist torque previously calculated by the generator.

A second controller may be introduced in the control system to minimise possible remaining steering system errors to zero. In a preferred embodiment the second controller may also attenuate undesired road disturbances with a low risk of instability in the operation of the steering system. When introduced the second controller calculates an adjustment value, which value adjusts the assist torque calculated by the first controller.

The control system operates in such a way that a signal from the motor controller controls the motor, and consequently the steering assist torque imposed by the motor to the steering assembly. In turn the signal from the first and possibly the second controller controls the motor controller, whereas a signal from the generator controls the first controller. The possible second controller is controlled by a combination of the signal from the generator and a signal corresponding to the steering wheel resist torque actually felt by the driver. In embodiments without a second controller the first controller is supplied with the signal from the generator, combined with the signal corresponding to the steering wheel resist torque actually felt by the driver. Further, said steering wheel resist torque actually felt by the driver is in turn dependent upon the amount of assist torque imposed by the motor to the steering assembly, reduced by the friction in the steering assembly and by the effects from different road loads, such as the road wheel friction against the road surface.

By its operation the control system controls the motor to impose an assist torque to the steering assembly so as to deliver a desired steering feel to the vehicle driver, i.e. so that the driver feels a desired steering wheel resist torque, wherein the desired steering wheel resist torque corresponds to or equals the desired resist torque calculated by the generator.

The configuration and operation of the invention facilitates a separation of the attenuation of road disturbances transmitted to the driver from the delivery of a desired steering wheel resist torque to the driver. In particularly the invention facilitates an explicit decoupling of the steering control from the generation of a desired steering wheel resist torque.

An additional advantage of this invention falls into the area of modularity. Especially the reference generator provides the subsequent controller with a desired steering wheel resist torque signal, which is independent from the rest of the contemplated control system and the contemplated steering system. The reference generator can therefore be reused for different applications, thus facilitating an application-independent steering feel.

Further advantages will appear from the following detailed description of the invention.

Brief description of the drawings

A preferred embodiment of the present invention will now be described in more detail, with reference to the accompanying drawings.

Fig. 1 shows a diagrammatic view of an electric powered assist steering system for a wheeled vehicle according to the present invention.

Fig. 2 shows a block diagram of a control system according to a first preferred embodiment of the present invention, employing a generator, a first controller and a second controller for controlling the electric power assisted steering system.

Fig. 3 shows a block diagram of a control system according to a second preferred embodiment of the present invention, employing a generator and a first controller for controlling the electric power assisted steering system.

Fig. 4 shows a block diagram of a generator for calculating a reference steering wheel assist torque according to the present invention.

Fig. 5 shows a Bode plot of the specific filter function in the second controller.

Detailed description of preferred embodiments of the invention

The EPAS-system

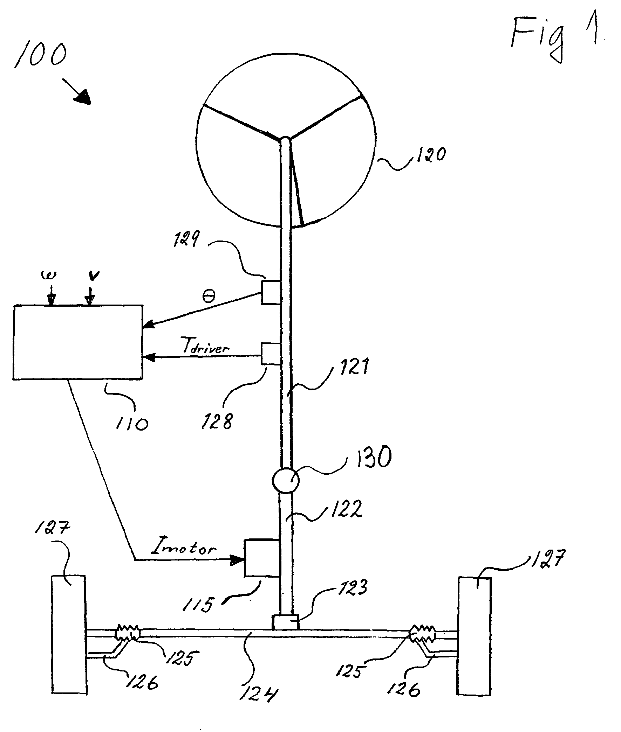

Referring to Fig. 1, an Electric Power Assisted Steering system 100 (hereinafter denoted EPAS-system) is illustrated. The EPAS-system 100 is preferably a system for use in steering the road wheels of an automobile or a vehicle, wherein the EPAS-system 100 is equipped with a control system 110 according to the present invention. Although the EPAS-system 100 is described in connection with a power assisted steering of the road wheels of an automobile, it should be appreciated that the EPAS-system 100 and the control system 110 according to the present invention may be employed to steer any number of front and/or rear wheels of a steered vehicle.

The EPAS-system Steering Assembly

The EPAS-system 100 shown in Fig. 1 comprises a steering assembly, i.a. comprising a steering wheel 120. The steering wheel 120 is generally disposed in the vehicle passenger compartment and manually operated by the driver of the vehicle to steer the road wheels 127. Further, the steering assembly includes a steering shaft 121, operatively coupled to the steering wheel 120. Said steering shaft 121 rotates in synchronization with the steering wheel 120, preferably directly connected to steering wheel 120. The steering assembly also employs a pinion shaft 122, operatively engaged with steering shaft 121. The steering shaft 121 and the pinion shaft 122 are preferably interconnected via a universal joint (130), as is well known in the vehicle steering art. Said pinion shaft 122 is coupled at one end to a pinion gear assembly 123 for converting angular rotation of the pinion shaft 122 to linear movement on a rack 124. The rack 124 is coupled on opposite ends to tie rods 125 and connector rods 126, which are movable to control left and right rotation of road wheels 127. It should be appreciated that the steering wheel 120, steering shaft 121, pinion shaft 122, and pinion gear assembly 123, rack 124, tie rods 125, connector rods 126 and road wheels 127 as shown only illustrates one of several suitable steering assemblies known to the person skilled in the art.

Other EPAS-system Components

The EPAS-system 100 as shown in Fig. 1 also includes a motor 115 coupled to the steering assembly, preferably to the pinion shaft 122. The motor 115 is preferably an electric motor, which provides an assist torque or force to the steering assembly, such as to assist the driver of the vehicle in rotating the steering wheel 120, i.e. so as to reduce the amount of steering effort required from the driver. The assist torque e.g. reduces the effect from friction components, such as friction in the steering assembly, and the effects from different road loads, such as road wheel friction against the road surface.

In addition the EPAS-system includes a torque estimator arrangement 128 for measuring and/or calculating the torque $T_{driver}$, which corresponds to or equals the resist torque actually felt by the driver, i.e. the resist torque actually felt by the driver when turning the steering wheel 120. The torque estimator 128 may in one embodiment comprise a torsion bar (not shown) e.g. arranged between the steering wheel 120 and the steering shaft 121, and an angle sensor (not shown) for measuring the deflection of said torsion bar. The deflection of said torsion bar increases when the driver feels more resist torque while turning the steering wheel 120, whereas the deflection decreases when the driver feels less resist torque while turning the steering wheel 120. Hence the deflection of the torsion bar will represent a measure of the resist torque $T_{driver}$ actually felt by the driver, which is dependent upon the resist torque received from the steering shaft 121. The resist torque received from the steering shaft 121 is in turn dependent upon various friction components, such as friction in the steering assembly, and the effects from different road loads, such as the road wheel friction against the road surface, reduced by the amount of steering assist torque imposed by the electric motor 115 to the steering assembly of the vehicle.

The EPAS-system 100 also comprises various types of vehicle sensors, such as accelerometers and velocity sensors, which are sensors well known to the person skilled in the art. An accelerometer sensor may e.g. be a lateral accelerometer sensor (not shown), for measuring the vehicle lateral acceleration. Further, the EPAS-system includes a yaw velocity sensor (not shown) for measuring the vehicle yaw rate w.

In a preferred embodiment accelerometer sensors are arranged at the vehicle centre of gravity. The position of the centre of gravity is a well-known design variable, which is generally determined by the vehicle manufacturer. However, in many applications various design constraints may dictate that such sensors cannot be placed at the exact centre of gravity. For instance, the centre of gravity may reside in a physical location that prohibits the placement of sensors at that location. Further, the placement of other components and systems may dictate that the location is not available for placing accelerometer sensors. In such cases the sensor output signals are compensated utilizing well-known principles for their geometric offsets from the centre of gravity.

In addition the EPAS-system 100 includes a steering wheel rotation-angle sensor 129 for measuring the steering wheel rotation-angle $\theta$. Preferably the steering wheel rotation-angle sensor 129 senses the angular position of the steering shaft 121, which provides a measure of the angular position of the steering wheel 120. The EPAS-system 100 may also monitor angular velocity $\theta'$ of the steering wheel 120, which may be measured by a separate sensor (not shown) or calculated by differentiating the steering wheel position angle $\theta$.

As an overall prerequisite the EPAS-system 100 may also utilise such vehicle information as vehicle speed etc, which information is commonly available in the electronic systems of most vehicles. All such information, in addition to information from the above mentioned sensors, may be supplied to the control system 110 for further processing.

Configuration of the Control System

Referring to Fig. 1 the EPAS-system 100 includes a control system 110 that controls the amount of assist torque that is imposed by the electric motor 115 to the steering assembly. The control system 110 preferably includes one or several microprocessor-based components, which have memory programmed to operate control routines, process input signals and generate output signals. Said components preferably include suitable interfaces and converters for receiving input signals and transmitting output signals.

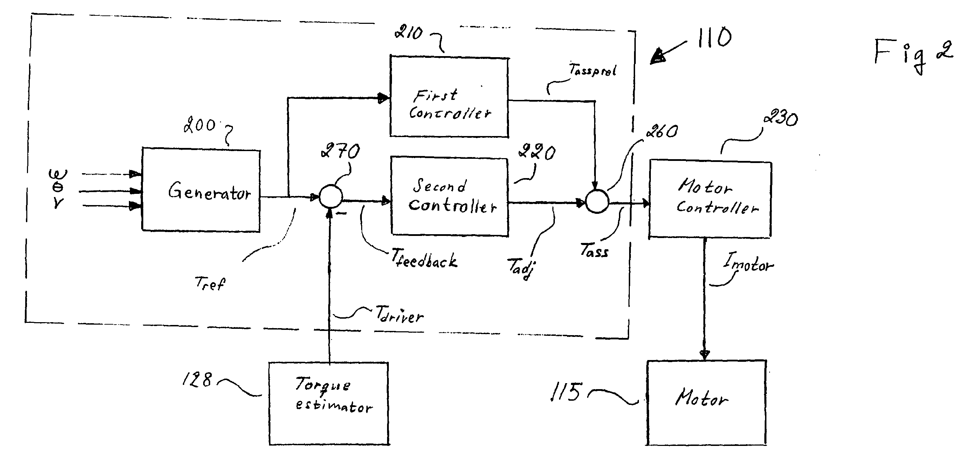

Referring to fig. 2 the control system 110 is preferably configured with a generator 200, a first controller 210 and possibly a second controller 220, and a motor controller 230. However, the motor controller 230 may not form a part of the control system 110, but rather a part of the EPAS-system 100.

The motor controller 230 and the electric motor 115 are standard components and the person skilled in the art is aware of several suitable alternative motor controllers and motors, therefore no detailed description of the configuration of the motor controller or the motor is needed.

Various filters and other functions may be introduced before or after said generator 200, said first controller 210, said second controller 220 and said motor controller 230 without departing from the invention. A disturbance filter may e.g. be introduced between the first controller 210 and the motor controller 230 without departing from the invention. While the generator 200, the first controller 210 and the second controller 220 are preferably implemented in software it should be appreciated that the control system 110 alternatively may include various analogue and/or digital circuits without departing from the present invention.

The Generator

Referring to fig. 2 the generator 200 in the control system 110 is preferably a reference generator, which calculates a reference or desired steering wheel resist torque $T_{ref}$ that should be felt by the driver of the vehicle, dependent upon the current driving scenario. The calculated desired resist torque $T_{ref}$ is used by the control system 110 as a reference value towards which the resist torque $T_{driver}$ actually felt by the driver is adapted to correspond or equal, which is accomplished by varying the assist torque imposed by the electric motor 115 to the steering assembly. The calculated desired resist torque $T_{ref}$ is preferably not based on or otherwise dependent on any measure, estimation, calculation which contains or reflects road disturbances.

Configuration and Operation of the Generator

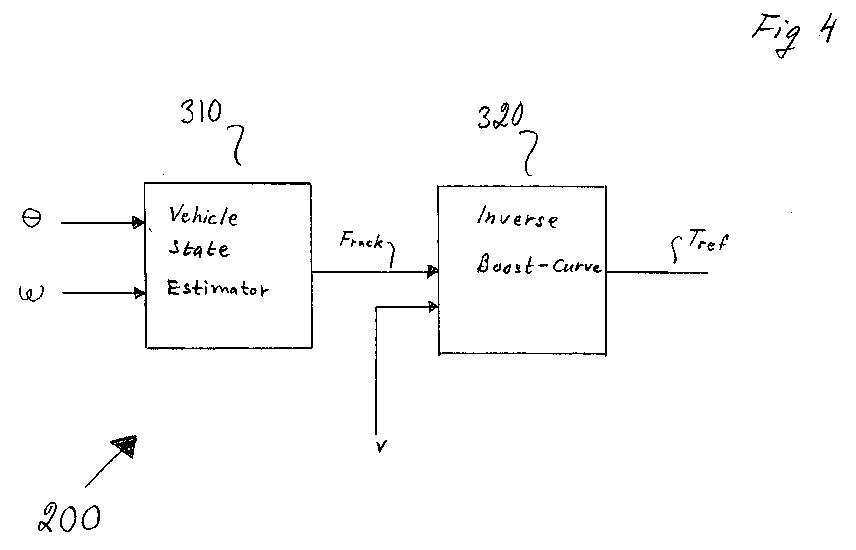

Referring to fig. 4 the reference generator 200 preferably comprises a vehicle state estimator 310 and an inverse boost-curve arrangement 320. The state estimator 310 is preferably based on a model of the steering properties of the present vehicle. Said state estimator 310 preferably receives a yaw rate signal $\omega$ and a steering wheel rotation-angle signal $\theta$, corresponding to the vehicle yaw rate and the vehicle steering wheel rotation-angle respectively. The state estimator 310 outputs an intermediate $F_{rack}$ signal, corresponding to an estimation of the total torque or force needed to be imposed on the steering assembly for steering the road wheels 127.

The equation representing the operation of the preferred vehicle state estimator 310 can be written as:

$$F_{rack} = C_2 \hat{x}(t) \qquad (10)$$

Wherein the differential of $\hat{x}(t)$ is defined by the equation

$$\dot{\hat{x}}(t) = A\hat{x}(t) + Bu(t) + K\left[y(t) - C_1\hat{x}(t)\right] \qquad (20)$$

Wherein u(t) is the steering wheel rotation-angle θ, y(t) is the yaw rate ω and K is the error feedback gain.

The vector $\hat{x}(t)(t)$ represents an estimation of vehicle state variables, i.e. sideslip angle, yaw rate and the lateral forces on front and rear axle. The equation $\dot{\hat{x}}(t)$ is recursively integrated to obtain $\hat{x}(t)$. In that respect $\hat{x}(t)$ is assigned a start or default value when the state estimator 310 starts operating. A first value of $\dot{\hat{x}}(t)$ is then calculated according to equation 20 above, depending upon a first simultaneously sampled value of the variables u(t) and y(t) respectively.

This value of $\dot{\hat{x}}(t)$ is then integrated to obtain a first value of $\hat{x}(t)$, e.g. by multiplying $\dot{\hat{x}}(t)$ with the time difference Δt representing the time elapsed between two samples of the variables u(t) and y(t). The first value of $\hat{x}(t)$ is then reused in equation 20 to calculate a second value of $\dot{\hat{x}}(t)$, depending on a second simultaneously sampled value of the variables u(t) and y(t) respectively, which second value of $\dot{\hat{x}}(t)$ is integrated a to obtain second value of $\hat{x}(t)$. This recursive integrating procedure is repeated as long as the state estimator 310 operates.

The terms A, B, $C_1$ and $C_2$ in equation 20 are defined as follows:

$$A = \begin{bmatrix} 0 & -1 & \dfrac{1}{mvx} & \dfrac{1}{mvx} \\ 0 & 0 & \dfrac{1f}{J} & -\dfrac{1r}{J} \\ clyvx & -\dfrac{cflf}{tauFvx} & -\dfrac{1}{tauF} & 0 \\ clyxv & \dfrac{crlr}{tauRvx} & 0 & -\dfrac{1}{tauF} \end{bmatrix} \qquad (30)$$

$$B = \begin{bmatrix} 0 \\ 0 \\ clyvx \\ 0 \end{bmatrix} \qquad (40)$$

$$C_1 = \begin{bmatrix} 0 \\ 0 \\ 1 \\ 0 \end{bmatrix} \qquad (50)$$

$$C_2 = \begin{bmatrix} 0 \\ 1 \\ 0 \\ 0 \end{bmatrix} \tag{60}$$

Wherein m denotes the vehicle mass, J the vehicle inertia, vx the longitudinal vehicle velocity, If and Ir the position of the vehicles center of gravity from front and rear axle respectively, cly the non-stationary contact patch cornering stiffness, cf and cr the cornering stiffens of front and rear axle respectively and tauF and tauR the time constant of these cornering stiffness.

The intermediate signal $F_{rack}$, calculated as described above, is received by the inverse boost-curve 320 arrangement. The intermediate signal $F_{rack}$ then decides the output signal from the inverse boost-curve 320, where said output signal is the desired steering wheel resist torque $T_{ref}$ signal, which is used by the control system 110 as a reference value, whereby the resist torque $T_{driver}$ actually felt by the driver is adapted to correspond or equal the desired resist torque $T_{ref}$.

In a preferred configuration and operation the inverse boost-curve 310 comprises one stored look-up table for every relevant vehicle speed $v$, e.g. one table may be stored for the velocity of 0 km/h, another table for 5 km/h, still another table for 10 km/h and so on, until the vehicle maximum speed is safely covered. Alternatively, there may be one look-up table stored for every increase of the velocity by 1 km/h, i.e. if the maximum speed of the vehicle is 200 km/h there are at least 200 tables stored. There may be other numbers or configurations of look-up tables without departing from the invention, e.g. there could be a high number of tables with in certain speed ranges and a lower number of tables in other speed ranges. As already mentioned the inverse boost-curve 310 operates in such a way that it receives the intermediate signal $F_{rack}$ calculated by the vehicle state observer 310 and, depending upon the value of the received intermediate signal $F_{rack}$, outputs a desired steering wheel resist torque $T_{ref}$ signal.

The reference generator 200 described above is merely an exemplary generator. There are a number of feasible ways to build a reference generator in which the underlying idea is to compute a desired resist torque that fulfils the drivers expectation for each driving scenario. One alternative approach is to use an analytical-based method e.g. using a model representing an ideal vehicle. Another alternative approach is to use a measurement-based procedure e.g. obtaining the relevant transfer functions of the specific vehicle by real driving and canalise the behaviour of this vehicle into the reference generator by an appropriate post processing.

The First Controller

Referring to fig. 2 the first controller 210 in the control system 110 is preferably a feed-forward controller that receives information about the desired steering wheel resist torque $T_{ref}$, calculated by the reference generator 200. A preliminary assist torque $T_{assprel}$ is calculated by the feed-forward controller 210, dependent upon the received desired steering wheel resist torque $T_{ref}$.

The feed-forward controller 210 is preferably a filter function generally based on an inverse model of the steering system dynamics of the present vehicle. The design of such a feed-forward controller falls into the area of traditional control engineering and various designs are well known by the person skilled in the art.

A preferred example of a feed-forward filter function H(s) is:

$$H(s) = \frac{J_{SC} \cdot s^2 + b_{SC} \cdot s + k_{SC}}{(s/\omega_f + 1)^3} \tag{70}$$

Wherein $J_{SC}$ is the lumped steering column inertia, $b_{SC}$ the steering column friction, $k_{SC}$ the lumped steering column spring stiffness and $\omega_f$ the filter frequency, whereas s represents the Laplace operator.

When a feed-forward filter function H(s) as exemplified above is used a preliminary assist torque $T_{assprel}$ can be calculated by the following formula:

$$T_{assprel} = H(s) \cdot T_{ref} \tag{80}$$

The preliminary assist torque $T_{assprel}$ corresponds to the assist torque to be imposed by the electric motor 115 to the steering assembly, so as to reduce the steering wheel torque in an amount substantially appropriate to let the driver feel the desired steering wheel resist torque $T_{ref}$, previously calculated by the reference generator 200.

The feed-forward filter function H(s) and the formula for calculating the preliminary assist torque $T_{assprel}$ correspond to the operation of a preferred first controller 210 according to the present invention. However, other controllers can be used, which controllers are known by the person skilled in the art to produce the same result.

The Second Controller

The preliminary assist torque $T_{assprel}$, calculated as described above, is preferably adjusted before it is supplied to the motor controller 230, which motor controller controls the electric motor 115. Such an adjustment is usually needed to reduce errors in the model used by the feed-forward controller and to reduce disturbances and measurement noise, e.g. received from detectors and sensors used by the control system 110.

Therefore, a second controller is preferably introduced in the control system 110 in order to compensate and minimise possible errors in the feed-forward controller 210 and to reduce disturbances and measurement noise, which reduces the risk of instability in the operation of the EPAS-system 100. In a preferred embodiment the second controller also attenuates undesired road disturbances, with a guarantee of stability in the operation of the EPAS-system 100.

Referring to fig. 2 the second controller 220 in the control system 110 is preferably a feedback controller, which receives a signal $T_{feedback}$. The signal $T_{feedback}$ is a combination of the desired steering wheel resist torque $T_{ref}$ signal and the $T_{driver}$ signal, where the $T_{driver}$ signal corresponds to the resist torque actually felt by the driver; defined by the formula:

$$T_{feedback} = T_{ref} - T_{driver} \qquad (90)$$

The feedback controller 220 calculates an adjustment value $T_{adj}$, which depends upon the received $T_{feedback}$ signal according to the following formula:

$$T_{adj} = A(s) \cdot T_{feedback} \qquad (100)$$

The feedback function A(s) is preferably a filter function e.g. defined by the general formula:

$$A(s) = \frac{a_{n-1}s^{n-1} + ... + a_2 s + a_1}{b_n s^n + ... + b_2 s + b_1} \qquad (110)$$

Wherein $a_{n-1}..a_1$ and $b_{n-1}..b_1$ are the polynomial coefficients of the numerator and denominator polynom, whereas s represents the Laplace operator.

A preferred filter function A(s) wherein n=5:

$$A(s) = \frac{0.0002889 \cdot s^4 + 0.0008672 \cdot s^3 + 0.292 \cdot s^2 + 0.5469s + 0.005714}{1.027 \cdot 10^{-6} \cdot s^5 + 0.000129 \cdot s^4 + 0.006079 \cdot s^3 + 0.1273 \cdot s^2 + s} \qquad (120)$$

However other general filter functions and special implementation of those can be used without departing from the invention.

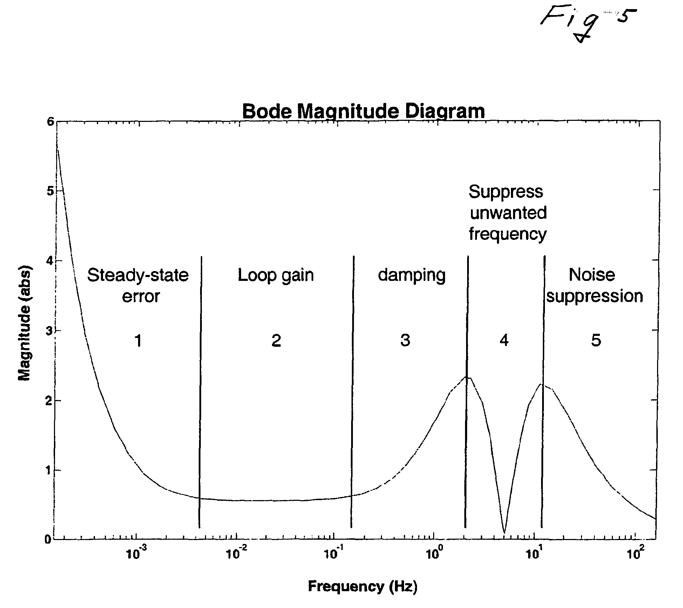

The Bode plot of the preferred filter function in equation 120 is shown in figure 5. Each frequency interval in the domain has its specific purpose as indicated in the figure. Interval 1 has the task of decreasing the steady state error, interval 2 and 3 are responsible for dynamic performance in terms of error and damping, interval 4 cancels unwanted frequencies and interval 5 avoids the influence from measurement noise.

It has briefly been stated above and it is clearly stated here that the formula for calculating the signal $T_{feedback}$, the feedback filter function A(s), and the formula used to calculate the adjustment value $T_{adj}$ represents the operation of a preferred second controller 220 according to the present invention. The invention is therefore not limited to the second controller now described. Other controllers known to the person skilled in the art can be used to minimise errors and disturbances, with a reduced risk of instability in the operation of the EPAS-system 100. Such alternative controllers may also be used to attenuate undesired road disturbances, with a guarantee of stability in the operation of the EPAS-system 100.

Now, when the preliminary assist torque $T_{assprel}$ and the adjustment value $T_{adj}$ have been calculated as described above, an assist torque $T_{ass}$ signal can be calculated and supplied to the motor controller 230. The calculation is preferably accomplished according to the formula:

$$T_{ass} = T_{prel} + T_{adj} \qquad\qquad (130)$$

It should be noted that the adjustment value $T_{adj}$ could both increase and decrease the preliminary assist torque $T_{assprel}$ as well as leave it unaffected, i.e. the adjustment signal $T_{adj}$ could be negative, positive or zero.

However, the second controller 220 may be omitted if possible deficiencies in the first controller 210 can be accepted without corrections in the particular application, and if possible uncertainties, disturbances or errors in or from the particular steering system can be accepted without corrections in the particular application.

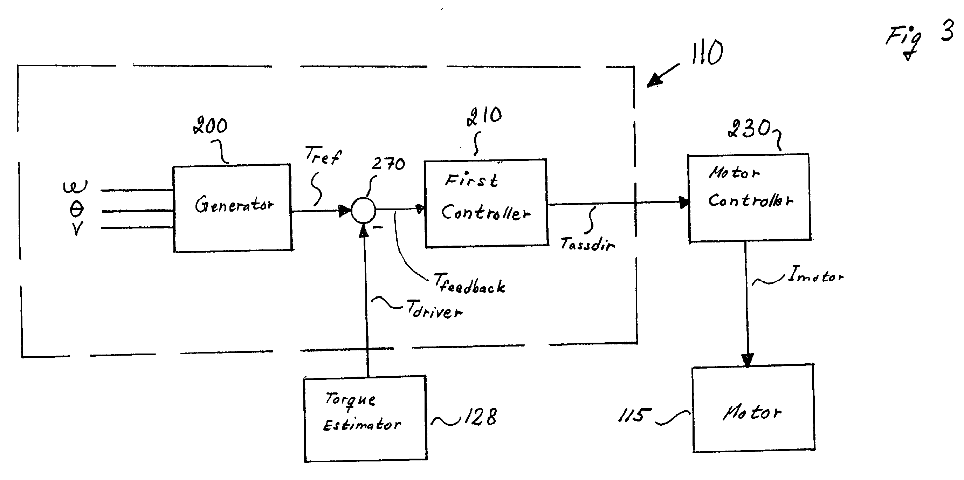

As shown in Fig. 3, if it is acceptable in the particular application to omit the second controller 220, the signal $T_{feedback}$ can be supplied to the first controller 210, which dependent upon the signal $T_{feedback}$ calculates an assist torque $T_{assdir}$ that is directly supplied to the motor controller 230. The motor controller 230 then commands the motor 115 to impose an assist torque to the steering assembly, said assist torque corresponding to said calculated assist torque $T_{assdir}$, whereby the steering wheel torque needed is reduced or possibly increased in an amount substantially appropriate to let the driver feel the desired steering wheel resist torque $T_{ref}$, previously calculated by the reference generator 200.

Communication within the Control System

According to a first preferred embodiment shown in fig. 2 the control system 110 communicates in such a way that the electric motor 115 receives a signal $I_{motor}$ from the motor controller 230, which causes the motor 115 to impose an assist torque to the steering assembly of the vehicle, wherein the assist torque corresponds to said received signal $I_{motor}$.

Said signal $I_{motor}$ received by the motor 115 corresponds in turn to an assist torque $T_{ass}$ signal, which is received by the motor controller 230. The motor controller 230 converts the received assist torque $T_{ass}$ signal into an output signal $I_{motor}$, adapted to the particular motor 115. The output signal $I_{motor}$ from the motor controller 230 is preferably a current, however it may be a voltage or some other appropriate signal adapted to command the particular motor, e.g. a digital command word.

Said received assist torque $T_{ass}$ signal corresponds in turn to a sum of a preliminary assist torque $T_{assprel}$ signal and an adjustment $T_{adj}$ signal, which are added in a summation arrangement 260. As a result said summation arrangement 260 outputs said assist torque $T_{ass}$ signal. The summation arrangement 260 is preferably implemented by software and/or by integrated circuits. However other summation arrangements may be used without departing from the invention.

Said preliminary assist torque $T_{assprel}$ signal depends in turn upon a desired resist torque $T_{ref}$ signal received by the feed-forward controller 210. The feed-forward controller 210 calculates and outputs said preliminary assist torque $T_{assprel}$ signal, which calculation is described above.

Said adjustment $T_{adj}$ signal depends in turn upon the desired resist torque $T_{ref}$ and a resist torque signal $T_{driver}$. The $T_{driver}$ signal is subtracted from the $T_{ref}$ signal in a comparison or subtraction arrangement 270, whereby the result from said subtraction is received by the feedback controller 220. The feedback controller 220 calculates and outputs said adjustment $T_{adj}$ signal, which calculation is described above. Said comparison or subtraction arrangement 270 is preferably implemented by software and/or by integrated circuits. However other arrangements may be used without departing from the invention.

Said desired resist torque $T_{ref}$ signal corresponds in turn to the desired steering wheel resist torque that should be felt by the driver, which desired resist torque $T_{ref}$ is calculated by the reference generator 200 as described above.

Said $T_{driver}$ signal corresponds in turn to the resist torque actually felt by the driver, i.e. the torque actually felt by the driver when turning the steering wheel 120. The $T_{driver}$ signal can e.g. be measured by a torque estimator arrangement 128 as described above.

According to a second preferred embodiment shown in fig. 3 the control system 110 communicates in such a way that the electric motor 115 receives a signal $I_{motor}$ from the motor controller 230, which causes the motor 115 to impose an assist torque to the steering assembly of the vehicle, wherein the assist torque corresponds to the received

**EP 1 431 160 B1**

signal $I_{motor}$.

Said signal $I_{motor}$ received by the motor 115 corresponds in turn to an assist torque $T_{ass}$ signal, which is received by the motor controller 230. The motor controller 230 converts the received assist torque $T_{assdir}$ signal into an output signal $I_{motor}$, adapted to the particular motor 115. The output signal $I_{motor}$ from the motor controller 230 is preferably a current, however it may be a voltage or some other appropriate signal adapted to command the particular motor, e.g. a digital command word.

Said received assist torque $T_{assdir}$ signal depends in turn upon the desired resist torque $T_{ref}$ and a resist torque signal $T_{driver}$. The $T_{driver}$ signal is subtracted from the $T_{ref}$ signal in a comparison or subtraction arrangement 270, whereby the result from said subtraction is received by the feed forward controller 210. The feed forward controller 210 calculates and outputs said assist torque $T_{assdir}$ signal as described above. Said comparison or subtraction arrangement 270 is preferably implemented by software and/or by integrated circuits. However other arrangements may be used without departing from the invention.

Said desired resist torque $T_{ref}$ signal corresponds in turn to the desired steering wheel resist torque that should be felt by the driver, which desired resist torque $T_{ref}$ is calculated by the reference generator 200 as described above.

Said $T_{driver}$ signal corresponds in turn to the resist torque actually felt by the driver, i.e. the torque actually felt by the driver when turning the steering wheel 120. The $T_{driver}$ signal can e.g. be measured by a torque estimator arrangement 128 as described above.

Operation of the Control System

In a first preferred embodiment referring to Fig. 2 the operation of the control system 110 is such that the reference generator 200 calculates a desired steering wheel resist torque $T_{ref}$ that should be felt by the driver of the vehicle, dependent upon the current driving scenario.

The desired steering wheel resist torque $T_{ref}$ is supplied to the feed-forward controller 210, which calculates a preliminary assist torque $T_{assprel}$ corresponding to an assist torque to be imposed by the electric motor 115 to the steering assembly, so as to reduce or possibly increase the steering wheel resist torque in an amount substantially appropriate to let the driver feel the desired steering wheel resist torque $T_{ref}$.

However, the preliminary assist torque $T_{assprel}$ is preferably adjusted by an adjustment torque $T_{adj}$ calculated by the feedback controller 220, where said adjustment torque $T_{adj}$ depends upon the desired steering wheel resist torque $T_{ref}$ and the resist torque $T_{driver}$ actually felt by the driver. Said adjustment torque $T_{adj}$ will increase if the resist torque $T_{driver}$ actually felt by the driver is less that the desired resist torque $T_{ref}$, while said adjustment torque $T_{adj}$ will decrease if the resist torque $T_{driver}$ actually felt by the driver is higher that the desired resist torque $T_{ref}$. In other words, more assist torque is needed if the resist torque $T_{driver}$ actually felt by the driver is less than the desired resist torque $T_{ref}$, while less assist torque is needed if the resist torque $T_{driver}$ actually felt by the driver is higher that the desired resist torque $T_{ref}$.

A sum of the preliminary assist torque $T_{assprel}$ and the adjustment torque $T_{adj}$ is then supplied to the motor controller 230, which commands the electric motor 115 to impose an assist torque to the steering assembly of the vehicle, which assist torque corresponds to said sum of $T_{assprel}$ and $T_{adj}$.

In a second preferred embodiment referring to Fig. 3 the operation of the control system 110 is such that the reference generator 200 calculates a desired steering wheel resist torque $T_{ref}$ that should be felt by the driver of the vehicle, dependent upon the current driving scenario, whereas the steering wheel resist torque $T_{driver}$ actually felt by the driver is measured or calculated by the torque estimator 128. The value of $T_{driver}$ is then subtracted from the value of $T_{ref}$, whereby more assist torque is needed if the resist torque $T_{driver}$ actually felt by the driver is less than the desired resist torque $T_{ref}$, while less assist torque is needed if the resist torque $T_{driver}$ actually felt by the driver is higher that the desired resist torque $T_{ref}$.

The feed forward controller 210 receives the result from said subtraction and calculates an assist torque $T_{assdir}$, which corresponds to the assist torque needed to be imposed by the electric motor 115 to the steering assembly, so as to reduce the steering wheel resist torque in an amount substantially appropriate to let the driver feel the desired steering wheel resist torque $T_{ref}$.

The assist torque $T_{assdir}$ is then supplied to the motor controller 230, which commands the electric motor 115 to impose an assist torque corresponding to said assist torque $T_{assdir}$ to the steering assembly of the vehicle.

The present invention should not be considered as being limited to the above described preferred embodiments, but rather includes all possible variations covered by the scope defined by the appended claims.

Reference signs

100    EPAS-System, Steering System

110    Control System
115    Motor
120    Steering Wheel
121    Steering Shaft
122    Pinion Shaft
123    Pinion Gear Assembly
124    Rack
125    Tie Rods
126    Connector Rods
127    Road Wheels
128    Torque Estimator
129    Steering Wheel Angle Sensor
130    Universal Joint
200    Generator
210    First Controller
220    Second Controller
230    Motor Controller
260    Summation Arrangement
270    Comparison Arrangement
310    Vehicle State Estimator
320    Inverse Boost-Curve

**Claims**

1.  A control system (110) for controlling an assist force imposed to a steering assembly of a vehicle, so as to deliver a steering wheel resist torque that can be felt by a driver of the vehicle, wherein;
    the delivered steering wheel resist torque is measured and compared with an estimated desired steering wheel resist torque, whereupon the delivered steering wheel resist torque is adapted by use of a feedback controller to be substantially the same as the desired steering wheel resist torque through adapting the amount of said assist force, **characterised in that**:

    said desired steering wheel resist torque is estimated from a model based on the steering properties of said vehicle using a steering wheel rotation angle signal ($\theta$) together with a yaw rate signal ($\omega$) or a vehicle lateral acceleration signal as input signals.

2.  A control system (110) according to claim 1 comprising:

    a generator (200) which provides a value of a desired steering wheel resist torque.

3.  A control system (110) according to claim 2 comprising:

    a first controller (210) receiving a value from said comparison and providing a value of an assist force substantially corresponding to the assist force needed for the delivered steering wheel resist torque to be substantially the same as the desired steering wheel resist torque.

4.  A control system (110) according to claim 2 or 3 comprising:

    a first controller (210) receiving a value of the desired steering wheel resist torque and providing a value of an assist force substantially corresponding to the assist force needed for the delivered steering wheel resist torque to be substantially the same as the desired steering wheel resist torque.

5.  A control system (110) according to claim 3 or 4 wherein:

    said first controller comprises a filter function based on an inverse model of the steering properties of the present vehicle.

6.  A control system (110) according to claim 4 or 5 comprising:

a second controller (220) receiving a value from said comparison and providing a value for adjusting said preliminary assist force provided by said first controller.

**7.** A control system (110) according to claim 6 wherein:

said adjustment is performed to minimise errors from the first controller (210) and to minimise disturbances and measurement noise received from the steering system (100) and to reduce the influence of road disturbances in the steering wheel (120).

**8.** A control system (110) according to claim 3 or 5 wherein:

the value provided by said first controller (210) is submitted to a motor controller (230) for controlling the assist torque imposed by a motor (115) to said steering assembly.

**9.** A control system (110) according to claim 4 or 5 wherein:

a sum of the values provided by said first controller (210) and said second controller (220) is submitted to a motor controller (230) for controlling the assist torque imposed by a motor (115) to said steering assembly.

**10.** A control system (110) according to any of the preceding claims wherein:

said steering assembly includes a shaft arrangement (121, 122, 130), by which a steering wheel (120) is mechanically coupled to road wheels (127).

**11.** A steering system (100) for imposing an assist force to a steering assembly of a vehicle, said steering system (100) comprising a control system (110) according to any of the preceding claims.


**Patentansprüche**

**1.** Steuersystem (110) zum Steuern einer Unterstützungskraft, mit der eine Lenkbaugruppe eines Fahrzeugs beaufschlagt wird, um ein Lenkrad-Widerstandsdrehmoment zu liefern, das von einem Fahrer des Fahrzeugs gefühlt werden kann, wobei:

das gelieferte Lenkrad-Widerstandsdrehmoment gemessen und mit einem geschätzten Soll-Lenkrad-Widerstandsdrehmoment verglichen wird, woraufhin das gelieferte Lenkrad-Widerstandsdrehmoment unter Verwendung einer Rückkopplungssteuereinheit so angepasst wird, dass es mit dem Soll-Lenkrad-Widerstandsdrehmoment im Wesentlichen übereinstimmt, indem der Betrag der Unterstützungskraft angepasst wird, **dadurch gekennzeichnet, dass**:

das Soll-Lenkrad-Widerstandsdrehmoment anhand eines Modells geschätzt wird, das auf den Lenkeigenschaften des Fahrzeugs basiert, wobei ein Lenkraddrehwinkelsignal ($\theta$) zusammen mit einem Gierratensignal ($\omega$) oder einem Fahrzeugquerbeschleunigungssignal als Eingangssignale verwendet werden.

**2.** Steuersystem (110) nach Anspruch 1, das umfasst:

einen Generator (200), der einen Wert eines Soll-Lenkrad-Widerstandsdrehmoments bereitstellt.

**3.** Steuersystem (110) nach Anspruch 2, das umfasst:

eine erste Steuereinheit (210), die einen Wert aus dem Vergleich empfängt und einen Wert einer Unterstützungskraft bereitstellt, der im Wesentlichen der Unterstützungskraft entspricht, die für das gelieferte Lenkrad-Widerstandsdrehmoment erforderlich ist, damit es im Wesentlichen gleich dem Soll-Lenkrad-Widerstandsdrehmoment ist.

**4.** Steuersystem (110) nach Anspruch 2 oder 3, das umfasst:

eine erste Steuereinheit (210), die einen Wert des Soll-Lenkrad-Widerstandsdrehmoments empfängt und einen Wert einer Unterstützungskraft bereitstellt, die im Wesentlichen der Unterstützungskraft entspricht, die für das gelieferte Lenkrad-Widerstandsdrehmoment erforderlich ist, damit es im Wesentlichen gleich dem Soll-Lenkrad-Widerstandsdrehmoment ist.

5. Steuersystem (110) nach Anspruch 3 oder 4, bei dem:

   eine erste Steuereinheit eine Filterfunktion umfasst, die auf einem inversen Modell der Lenkeigenschaften des betrachteten Fahrzeugs basiert.

6. Steuersystem (110) nach Anspruch 4 oder 5, das umfasst:

   eine zweite Steuereinheit (220), die einen Wert aus dem Vergleich empfängt und einen Wert für die Einstellung der durch die erste Steuereinheit bereitgestellten vorläufigen Unterstützungskraft bereitstellt.

7. Steuersystem (110) nach Anspruch 6, bei dem die Einstellung so ausgeführt wird, dass Fehler von der ersten Steuereinheit (210) minimiert werden und Störungen und ein Messrauschen, die von dem Lenksystem (100) empfangen werden, minimiert werden, und dass der Einfluss der Straßenstörungen auf das Lenkrad (120) reduziert wird.

8. Steuersystem (110) nach Anspruch 3 oder 5, bei dem:

   der durch die erste Steuereinheit (210) bereitgestellte Wert an eine Motorsteuereinheit (230) weitergegeben wird, um das Unterstützungsdrehmoment, mit dem die Lenkbaugruppe durch einen Motor (115) beaufschlagt wird, zu steuern.

9. Steuersystem (110) nach Anspruch 4 oder 5, bei dem:

   eine Summe der Werte, die durch die erste Steuereinheit (210) und die zweite Steuereinheit (220) bereitgestellt werden, an eine Motorsteuereinheit (230) weitergegeben werden, um das Unterstützungsdrehmoment, mit dem die Lenkbaugruppe durch einen Motor (115) beaufschlagt wird, zu steuern.

10. Steuersystem (110) nach einem der vorhergehenden Ansprüche, bei dem:

    die Lenkbaugruppe eine Wellenanordnung (121, 122, 130) enthält, durch die das Lenkrad (120) mit den Fahrbahnrädern (127) mechanisch gekoppelt ist.

11. Lenksystem (100) für die Beaufschlagung einer Lenkbaugruppe eines Fahrzeugs mit einer Unterstützungskraft, wobei das Lenksystem (100) ein Steuersystem (110) nach einem der vorhergehenden Ansprüche umfasst.

**Revendications**

1. Un système de contrôle (110) permettant de réguler une force d'assistance imposée à l'ensemble de direction d'un véhicule, afm de fournir un couple de résistance au volant pouvant être ressenti par le conducteur d'un véhicule, dans lequel ;
   le couple de résistance au volant est mesuré et comparé au couple désiré, après quoi le couple de résistance au volant est corrigé à l'aide d'un servo-régulateur pour être semblable au couple de résistance au volant attendu, en modulant la puissance de ladite force d'assistance,
   **caractérisé par le fait que** :

   ledit couple de résistance au volant est estimé à partir d'un modèle basé sur les propriétés directionnelles dudit véhicule utilisant comme données d'entrée à la fois un signal d'angle de braquage du volant ($\theta$) et un signal du taux de lacets ($\omega$) ou un signal de l'accélération latérale du véhicule.

2. Un système de contrôle (110) selon la revendication 1, comprenant :

   un générateur (200) qui fournit une valeur du couple de résistance au volant désiré.

3. Un système de contrôle (110) selon la revendication 2, comportant :

un premier régulateur (210) qui reçoit une valeur de ladite comparaison et qui fournit une valeur de la force d'assistance correspondant sensiblement à la force d'assistance nécessaire pour que le couple de résistance au volant soit sensiblement le même que le couple de résistance au volant attendu.

4. Un système de contrôle (110) selon la revendication 2 ou 3 comprenant :

un premier régulateur (210) qui reçoit une valeur du couple de résistance au volant désiré et qui fournit une valeur de force d'assistance correspondant quasiment à la force d'assistance nécessaire pour que le couple de résistance au volant délivré soit sensiblement le même que le couple de résistance au volant attendu.

5. Un système de contrôle (110) selon les revendications 3 ou 4, dans lequel :

ledit premier régulateur comprend une fonction de filtrage basé sur un modèle inverse des propriétés directionnelles du présent véhicule.

6. Un système de contrôle (110) selon les revendications 4 ou 5 comprenant :

un deuxième régulateur (220) qui reçoit une valeur dudit comparateur et qui fournit une valeur pour régler ladite force d'assistance préliminaire fournie par ledit premier régulateur.

7. Un système de contrôle (110) selon la revendication 5, dans lequel :

ledit réglage est effectué pour minimiser les erreurs du premier régulateur (210) et minimiser les perturbations et le bruit de mesurage issus du système de direction (100), et pour réduire l'influence des inégalités de la chaussée sur le volant (120).

8. Un système de contrôle (110) selon les revendications 3 ou 5, dans lequel :

la valeur fournie par ledit premier régulateur (210) est transmise à un servomoteur (230) pour réguler la force d'assistance imposée par un moteur (115) au dit ensemble de direction.

9. Un système de contrôle (110) selon les revendications 4 ou 5 dans lequel :

la somme des valeurs fournies par ledit premier régulateur (210) et ledit deuxième régulateur (220) est transmise à un servomoteur (230) pour réguler le couple d'assistance imposé par un moteur (115) au dit ensemble de direction.

10. Un système de contrôle (110) selon n'importe laquelle des revendications précédentes, dans lequel :

ledit ensemble de direction comprend une colonne d'éléments (121, 122, 130) qui permet le couplage mécanique du volant (120) avec les roues sur la chaussée (127).

11. Un système de direction (100) pour imposer une force d'assistance à un ensemble de direction d'un véhicule, ledit système de direction (100) comportant un système de régulation (110) selon n'importe laquelle des revendications précédentes.

Fig 1

100

120

129

ω  v

θ

$T_{driver}$

110        128

121

130

122

127

$I_{motor}$

115        123

127

125        124        125
126                        126

EP 1 431 160 B1

Fig 2

17

Fig 3

EP 1 431 160 B1

200 Generator

$T_{ref}$

270

$T_{feedback}$

$T_{driver}$

210 First Controller

$T_{assdir}$

110

230 Motor Controller

$I_{motor}$

128 Torque Estimator

115 Motor

EP 1 431 160 B1

*Fig 4*

310

320

$\Theta$ → **Vehicle State Estimator**

$\omega$ →

Frack → **Inverse Boost-Curve**

V →

→ ʃ Tref

200

*Fig 5*

**Bode Magnitude Diagram**

Frequency (Hz)